# EUROPEAN PATENT APPLICATION

(11) **EP 1 475 579 A2**
(43) Date of publication of application: **10.11.2004**
(21) Application number: 04394025.3
(22) Date of filing: 10.05.2004
(51) Int. Cl.: F24H 8/00, F28D 21/00

(54) **A condensing unit**

(30) Priority: 08.05.2003 IE 20030347; 31.07.2003 IE 20030573
(71) Applicant: ALLEY ENTERPRISES LIMITED, Birr, County Offaly (IE)
(72) Inventor: Grant, Stephen William John, Birr, County Offaly (IE)
(74) Representative: Schütte, Gearoid

(57) **Abstract**

There is provided a condensing unit (1) for a water heating boiler forming part of a water heating system. The condensing unit (1) has a main enclosure (12) which houses a water jacket (35) and an exhaust gas flue passageway (20). There is provided an inlet manifold (25) for exhaust gases produced by the boiler which delivers the exhaust gases to gas conduits formed by tubes (32) incorporating spirally wound baffles (33). The exhaust gases are delivered from the inlet manifold (25) to a transfer manifold (27), then through further gas conduits (30), from the transfer manifold (27) to an outlet manifold (26). Return water from the heating system is delivered through a water jacket inlet (15) to a water jacket outlet (16) which is connected to the return inlet of the boiler, thus heating the water. The advantage of this stand alone unit is that it can be readily easily fitted to existing boilers, either against the side of the boiler or on top of it.

## Description

The present invention relates to a condensing unit for water heating boilers.

Such a condensing unit is often used for connection to a water heating boiler in a water heating system, the boiler having a boiler system water outlet and a boiler system water return inlet for connection respectively to a system boiler feed pipe and a system water return pipe and a boiler gas outlet for connection to an exhaust gas flue inlet, the condensing unit comprising an exhaust flue passageway for connection between the boiler gas outlet and the exhaust gas flue inlet, a water jacket surrounding most of the exhaust flue passageway for heat transfer between the water jacket having a water jacket inlet for connection to the system boiler return pipe and a water jacket outlet for connection to the boiler system return inlet. Essentially, the condensing unit acts as a pre-heater for the boiler input water, namely, the system return water.

However, under certain conditions, when the system water feeding the condensing unit is at a relatively low temperature, the exhaust gases will be cooled below the dew point of certain of the components of the exhaust gases. These components will then condense giving up the latent heat of condensation. Accordingly, under these conditions, the actual efficiency of the boiler could exceed a nominal 100%, that is to say, the actual heat input of the burning fuel such as oil or gas, will exceed the theoretically possible heat exchange between the burning fuel and the system water. The additional heat is provided by the condensing of components of the exhaust gases.

Generally, the water entering the condenser or condensing unit is of the order of 30°C and the water outlet, having been heated by the flue gases, is of the order of 50°C. The flue gases which originally enter the condensing unit at approximately 180°C are cooled to approximately 45°C and thus condensation occurs. However, if the water entering the condensing unit is at approximately 55°C, it would tend to be delivered out of the condensing unit and into the boiler, that is, very often, the boiler return pipe, at 75°C. Then, the flue gases will usually be of the order of 190°C dropping to 65°C without condensation.

The main problem with the use of such condensing units, either in conjunction with the boiler as an add-on attachment or integrally mounted within the boiler, is the need to achieve efficient heat transfer while, at the same time, providing a relatively easily maintained unit.

There are considerable advantages in providing a stand alone add-on unit, in that such an add-on unit or add-on attachment allows it to be used in conjunction with previously fitted boilers. Further, and even more importantly, it can be mounted beside the boiler and thus takes up relatively little space, which can often be a consideration, particularly where boilers are mounted under worktops in kitchens and such areas.

The present invention is directed towards providing a condensing unit that will achieve some of these aims.

### Statements of Invention

According to the invention, there is provided a condensing unit for connection to a water heating boiler in a water heating system, the boiler having a boiler system water outlet and a boiler system water return inlet for connection respectively to a system boiler feed pipe and a system water return pipe and a boiler gas outlet for connection to an exhaust gas flue inlet, the condensing unit comprising an exhaust flue passageway for connection between the boiler gas outlet and the exhaust gas flue inlet, a water jacket surrounding most of the exhaust flue passageway for heat transfer between the water jacket having a water jacket inlet for connection to the system boiler return pipe and a water jacket outlet for connection to the boiler system return inlet, characterised in that the condensing unit comprises:
a freestanding main enclosure; and
the exhaust gas flue passageway comprises a pair of spaced-apart manifolds,
namely, a main manifold divided into an inlet manifold having a passageway inlet for connection to the boiler gas outlet and an outlet manifold having a passageway outlet for connection to the exhaust gas flue inlet and a transfer manifold and at least one gas transfer conduit between each of the inlet and outlet manifolds and the transfer manifold.

There are major advantages with this construction. By having a freestanding unit, it is possible to mount the unit in conjunction with existing boilers and thus ensure that the heating efficiency of existing boilers is greatly enhanced. Heretofore, such units were always incorporated within the boiler and thus to provide a condensing unit essentially required the provision of a new boiler. Further, the particular construction allows easy cleaning and an efficient heat transfer because the flue gases are led back and forth across the condensing unit, greatly enhancing heat transfer. The whole purpose is to cool the exhaust gases from the boiler as much as possible so that condensation will occur. This particular construction allows such cooling. The more heat that could be extracted from the flue gases, the better.

In one embodiment of the invention, each gas conduit comprises a through tube mounting a baffle assembly, which baffle assembly may comprise a spirally wound plate. Ideally, there are a plurality of tubes between each of the manifolds. This particular construction of baffle assembly is relatively efficient to clean, efficient to manufacture and gives amazingly good heat transfer.

In another embodiment of the invention, the water jacket surrounds all the gas conduits.

In another embodiment of the invention, each gas conduit comprises a tubular member having a peripheral wall forming, in cross section, peaks and valleys whereby additional contact area separating the water and exhaust gases is provided.

In a still further embodiment, there are two gas conduits formed by the one tubular member with a dividing wall forming the separate gas conduits, the tubular member having a peripheral wall forming, in cross section, peaks and valleys whereby additional contact area separating the water and exhaust gases is provided. The great advantage of this particular construction is that the gas conduit may be provided by a sheet of metal bent around its ends and welded along contiguous edges. This is a very simple construction of unit to provide. It is easy to manufacture and relatively in expensive. A very efficient heat transfer surface is achieved with relatively little difficulty. Further, because it is manufactured from the one sheet, leaks, etc. are unlikely to occur. It also reduces the amount of welding and consequently, welding inspection, required.

In another embodiment of the invention, the water jacket comprises a main tank having substantially parallel extension tanks projecting therefrom and abutting against a cover plate, the cover plate extension tanks and the main tank forming the plurality gas conduits therebetween. The cover plate can also be in the form of another water tank communicating with the main tank. Again, this is a relatively simple construction and particularly when the cover plate is simply a plain cover plate, it can be easily removed for cleaning.

In a still further embodiment of the invention, the water jacket comprises an internal partial divider wall dividing the water jacket into two separate tanks interconnected adjacent the transfer manifold, one tank in contact with the gas transfer conduit between the inlet end transfer manifolds, the other with the gas transfer conduit between the outlet and transfer manifolds.

Ideally, the main enclosure is adapted to lie against the side of the boiler in close proximity thereto or on top of the boiler.

### Detailed Description of the Invention

The invention will be more clearly understood from the following description of some embodiments thereof, given by way of example only, with reference to the accompanying drawings, in which:
Fig. 1 is a schematic exploded view of a condensing unit fitted in a heating system,
Fig. 2 is a perspective partially cut-away view of the condensing unit of Fig. 1,
Fig. 3 is a typical diagrammatic section through the condensing unit,
Fig. 4 is a perspective view of a baffle used in the condensing unit,
Fig. 5 is a perspective partially cut-away view of another condensing unit according to the invention,
Fig. 6 is a perspective view of a still further condensing unit according to the invention,
Fig. 7 is a plan sectional view of the condensing unit of Fig. 5,
Fig. 8 is a typical vertical sectional view of the condensing unit of Fig. 6,
Fig. 9 is a perspective view of an alternative construction of condensing unit affixed to a boiler,
Fig. 10 is a plan partially diagrammatic view of another condensing unit according to the invention,
Fig. 11 is a sectional diagrammatic view of the condensing unit of Fig. 10,
Fig. 12 is a perspective view of portion of a metal sheet used in the construction of the condensing unit of Figs. 10 and 11, and
Figs. 13 and 14 are views of different sheets that could be used in the construction of the condensing unit of Figs. 10 and 11.

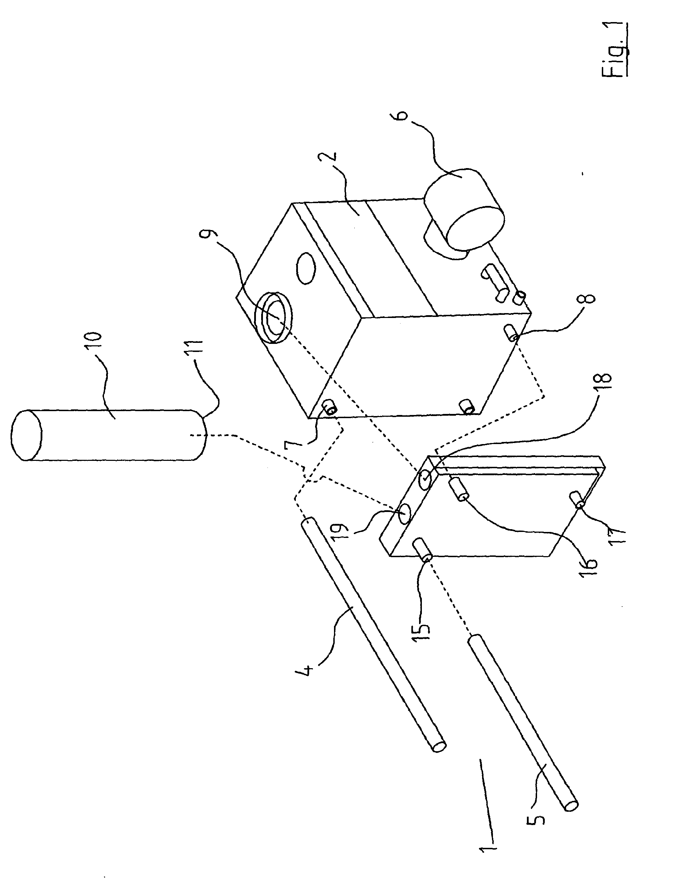

Referring to the drawings and initially to Figs. 1 to 4 thereof, there is provided a condensing unit, indicated generally by the reference numeral 1, for mounting on a water heating boiler 2 for forming part of a heating system of which only a system water feed pipe 4 and a system water return pipe 5 are illustrated. There is also illustrated a burner 6 mounted on the boiler 2. The boiler 2 has a boiler system water outlet 7 and a boiler system water return inlet 8. The boiler 2 has a boiler gas outlet 9 for connection to an exhaust gas flue 10 having an exhaust gas flue inlet 11 when the condensing unit 1 is not fitted. Similarly, when the condensing unit is not fitted, the boiler 2 connects directly to the system water return pipe 5. The condensing unit further comprises a main enclosure 12.

A water jacket inlet 15 is provided in the condensing unit 1, which water jacket inlet 15 is in use connected to the system water return pipe 5. The condensing unit 1 also has a water jacket outlet 16 for connection to the boiler system water return inlet 8 and also includes a condensate drain-off 17. Further, the condensing unit 1 has a gas passageway inlet 18 for connection to the boiler gas outlet 9 and a passageway outlet 19 for connection to the exhaust gas flue inlet 11. Various connections between the parts are shown by interrupted lines and arrows.

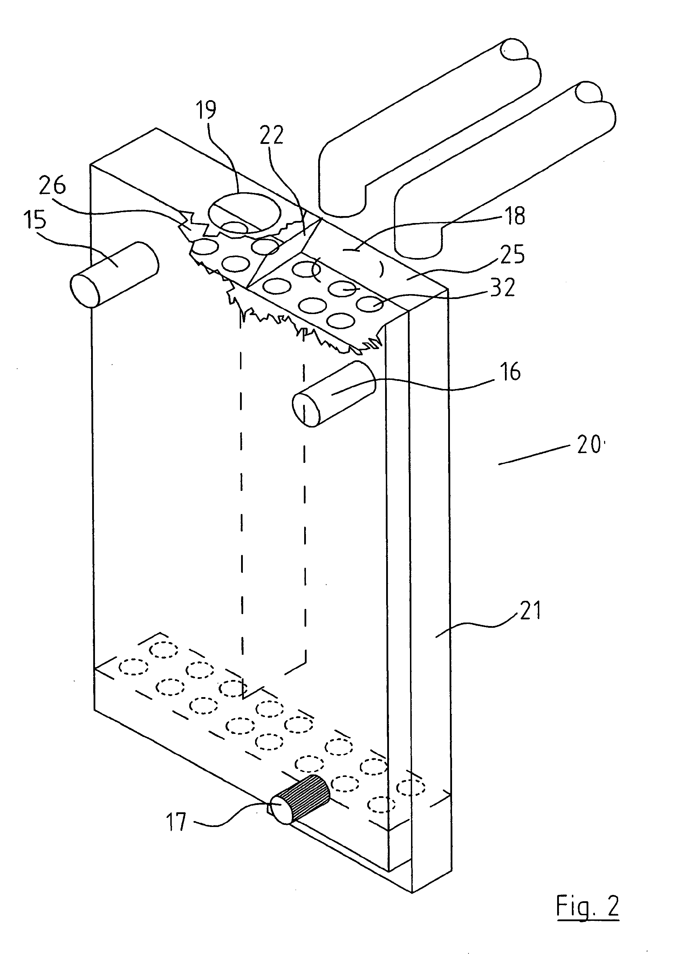

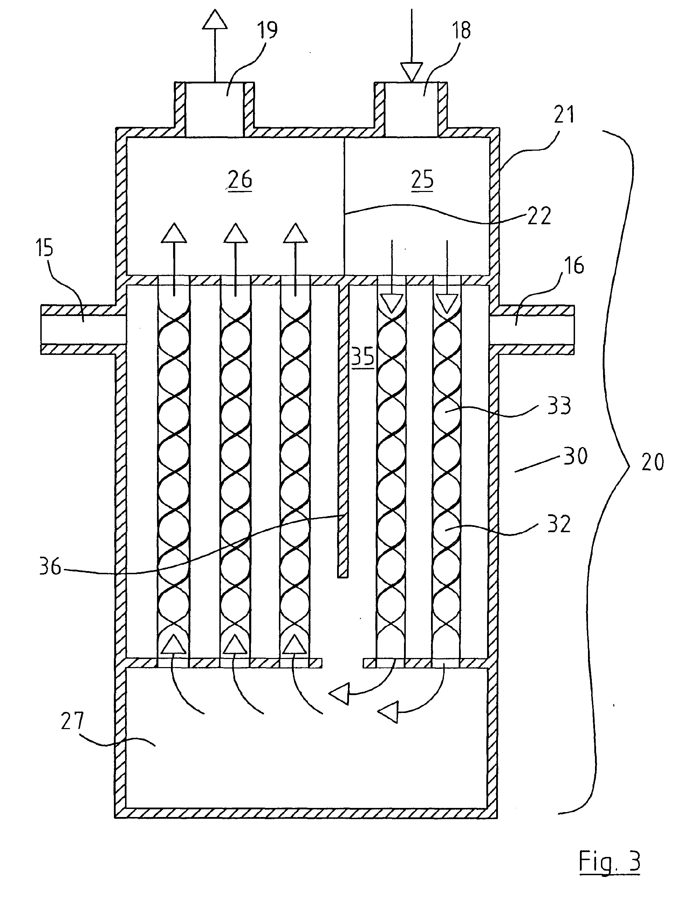

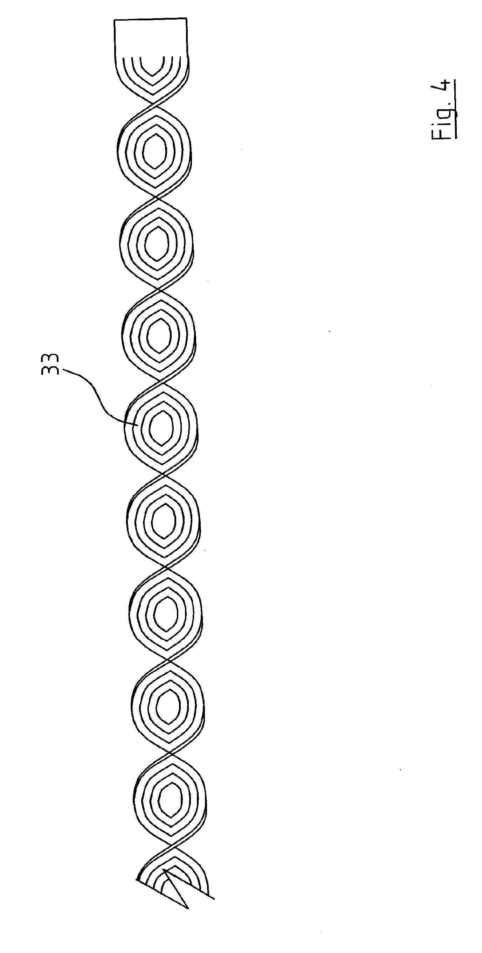

Referring now to Figs. 2 and 3, there is illustrated an exhaust gas flue passageway, indicated generally by the reference numeral 20, comprising a main manifold 21 separated by a divider plate 22 into an inlet manifold 25 and an outlet manifold 26. The exhaust gas flue passageway 20 further comprises a gas conduit, indicated generally by the reference numeral 30, connecting the inlet manifold 25 to the transfer manifold 27 and then the transfer manifold 27 to the outlet manifold 26. In this embodiment, the gas conduit 30 comprises through tubes 32, each relatively loosely mounting a baffle assembly 33 formed from a spirally wound plate, as illustrated in Fig. 4. A water jacket 35 surrounds the gas conduit 30 and further comprises a divider plate 36.

In use, connections are made, as shown in Fig. 1, and the system water return pipe 5 delivers return water from the heating system into the water jacket inlet 15 and then out through the water jacket outlet 16 to the boiler water return inlet 8. The passageway inlet 18 is connected to the boiler gas outlet 9 and the passageway outlet 19 is connected to the exhaust gas flue inlet 11.

Thus, in operation of the boiler 2, the exhaust gases are delivered through the gas passageway inlet 18 down through the gas conduits 30, namely the tubes 32, from the inlet manifold 25 down to the transfer manifold 27 and then up through further gas conduits 30 into the outlet manifold 26 and from the outlet manifold 26 through the passageway outlet 19 and the gas flue inlet 11 into the flue 10. Thus, the exhaust gases will heat the system return water so that the water is pre-heated in the boiler. Any condensate bleeds off through the condensate drain off 17.

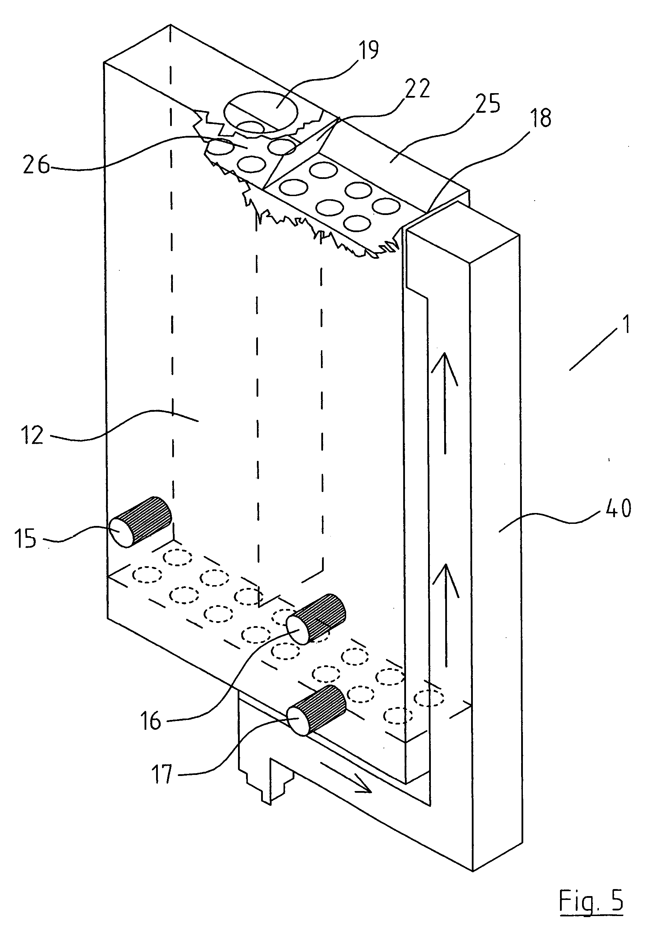

Referring to Fig. 5, there is illustrated an alternative construction of condensing unit, again indicated generally by the reference numeral 1, in which all the parts are similar to those described with reference to the previous drawings, except that in this embodiment, the condensing unit 1 may be mounted on top of a boiler and thus the passageway inlet 18 is connected by a gas transfer duct 40 to the boiler 2.

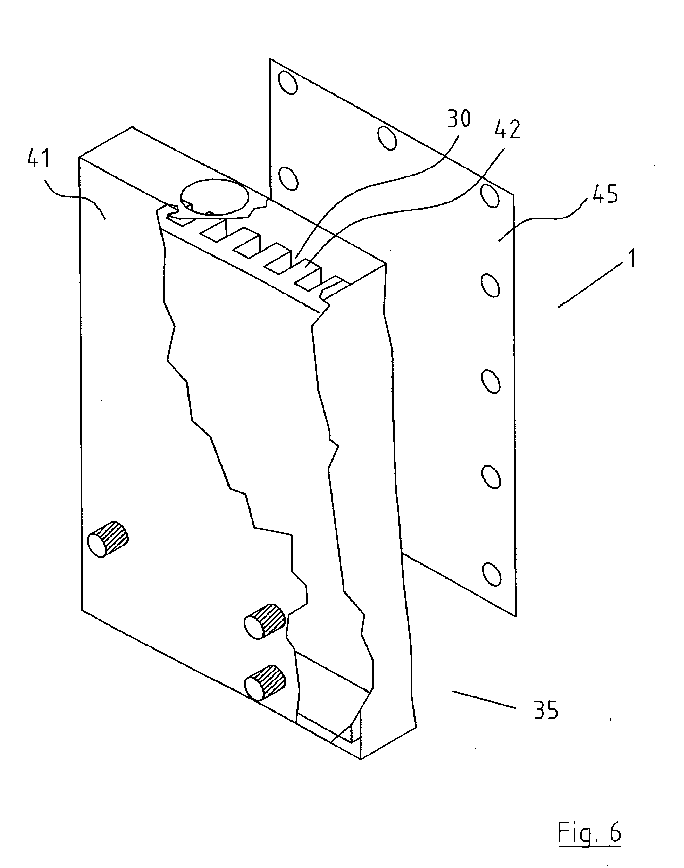

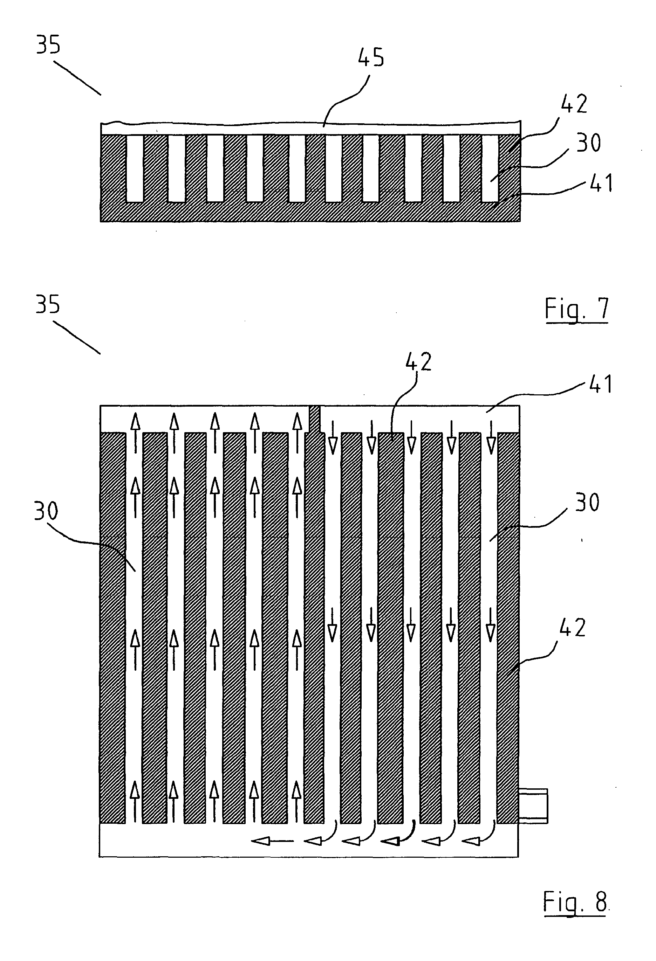

Referring to Figs. 6 to 8 inclusive, there is illustrated an alternative construction of condensing unit, again indicated generally by the reference numeral 1 and parts similar to those described with reference to the previous drawings, are identified by the same reference numerals. In this embodiment, the water jacket, again identified generally by the reference numeral 35, comprises a main tank 41 having substantially parallel extension tanks 42 projecting therefrom and abutting against a cover plate 45. The cover plate 45 and the extension tanks 42 form a plurality of gas conduits, again identified by the reference numeral 30. This condensing unit 1 may be mounted, as in either of the previous embodiments, namely, against the side of a boiler or on top of the boiler. It will also be appreciated that, for convenience, the condensing unit may be placed spaced-apart from the boiler but should not generally be too far away from it and again, parts similar to those described with reference to the previous drawings, are identified by the same reference numerals.

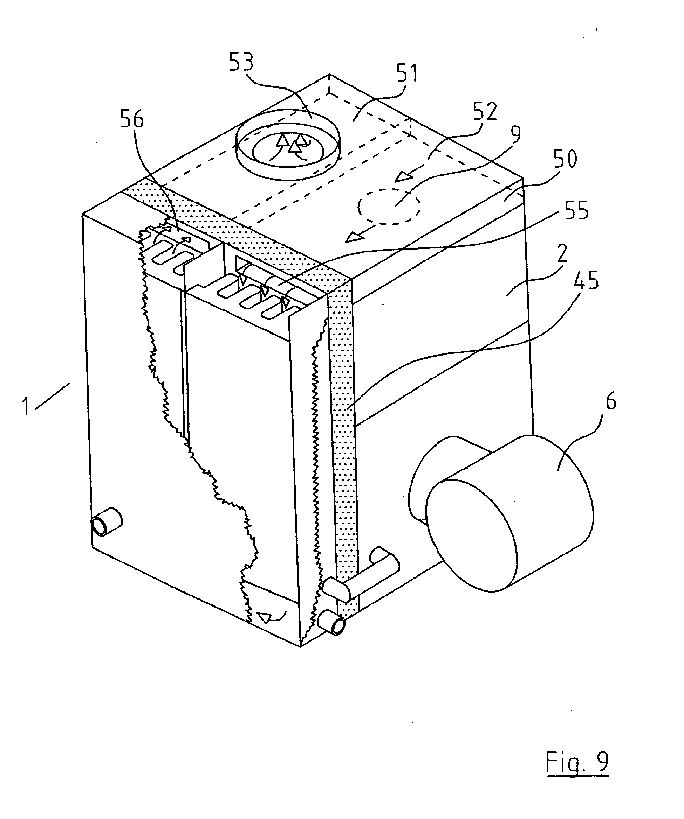

Referring to Fig. 9, there is illustrated an alternative construction of condensing unit, again indicated generally by the reference numeral 1, which is substantially similar in construction to the condensing unit of Figs. 6 to 8 inclusive, except in this embodiment, the boiler 2 is provided with a cover 50 over its boiler gas outlet (not shown), which cover 50 is effectively divided into two exhaust manifolds 51 and 52, with the manifold 51 having an exhaust outlet 53 for connection to the exhaust gas flue inlet 11. In this embodiment, the plate 45 is formed from an insulation material having a hole forming a transfer passageway 55 between the exhaust manifold 52 and the inlet manifold 25 and a further transfer passageway 56 between the outlet manifold 26 and the exhaust manifold 52.

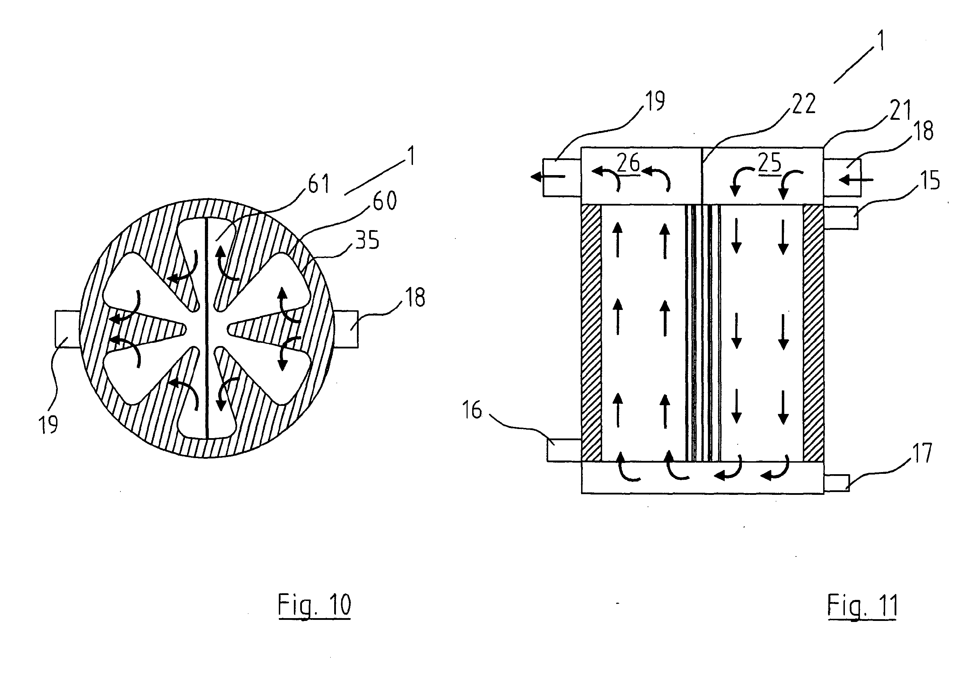

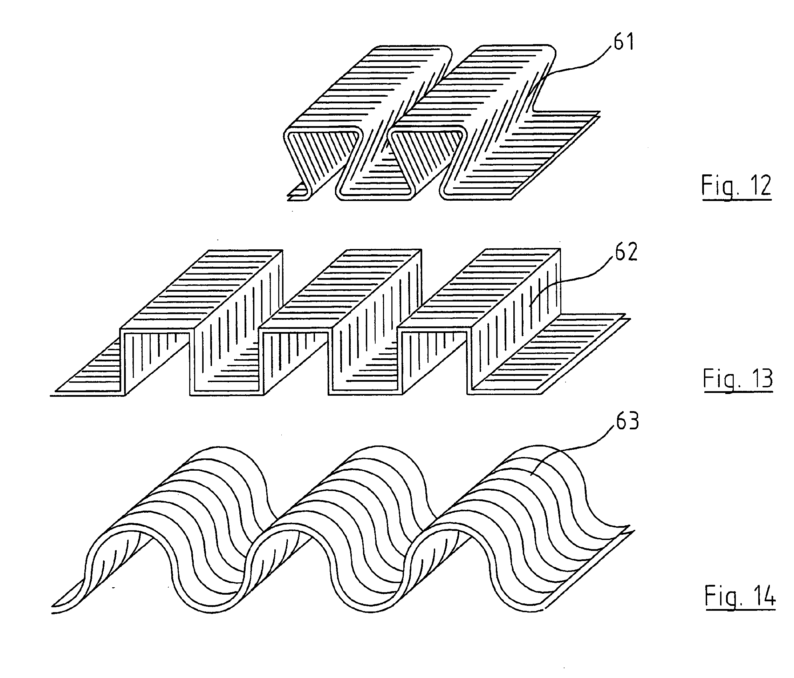

Referring to Figs. 10 to 13, there is illustrated a further construction of condensing unit, again indicated generally by the reference numeral 1, in which parts similar to those described with reference to the previous drawings, are identified by the same reference numerals. In this embodiment, the gas conduit 30 is provided with a sheet of metal 60 bent around its ends. The divider plate 22 projects down from the main manifold 21 into the gas flue passageway to divide it into the required gas conduits 30. The gas conduits 30 are essentially provided by what is a central core from which radiates a plurality of outwardly directed hollow fins of substantially triangular cross section. It is manufactured from a sheet of metal 61, as illustrated in Fig. 12. The sheet of metal 61 is simply bent around on itself and is welded along contiguous edges.

Referring to Figs. 13 and 14, there is illustrated other constructions of sheet 62 and 63 for the provision of the gas conduits 30. It will be appreciated that many shapes of bent plate may be used to form the wall 51 of the gas passageway such as the sheets 62 and 63, as illustrated in Figs. 13 and 14. Essentially, the construction is that a considerable contact area is provided, without any need for elaborate welding or other fabrication techniques.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail within the scope of the claims.

## Claims

1. A condensing unit (1) for connection to a water heating boiler (2) in a water heating system, the boiler (2) having a boiler system water outlet (7) and a boiler system water return inlet (8) for connection respectively to a system boiler feed pipe (4) and a system water return pipe (5) and a boiler gas outlet (9) for connection to an exhaust gas flue inlet (11), the condensing unit (1) comprising an exhaust flue passageway (20) for connection between the boiler gas outlet (9) and the exhaust gas flue inlet (11), a water jacket (35) surrounding most of the exhaust flue passageway (20) for heat transfer between the water jacket (35) having a water jacket inlet (15) for connection to the system boiler return pipe (5) and a water jacket outlet (16) for connection to the boiler system return inlet (18), **characterised in that** the condensing unit (1) comprises:
a freestanding main enclosure (12); and
the exhaust gas flue passageway (20) comprises a pair of spaced-apart manifolds (21, 27), namely, a main manifold (21) divided into an Inlet manifold (25) having a passageway inlet (19) for connection to the boiler gas outlet (9) and an outlet manifold (26) having a passageway outlet (19) for connection to the exhaust gas flue inlet (11) and a transfer manifold (27) and at least one gas transfer conduit (30) between each of the inlet and outlet manifolds (25, 26) and the transfer manifold (27).

2. A condensing unit (1) as claimed in claim 1, in which each gas conduit (30) comprises a through tube (32) mounting a baffle assembly (33).

3. A condensing unit (1) as claimed in claim 3, in which the baffle assembly (33) comprises a spirally wound plate.

4. A condensing unit (1) as claimed in claim 2 or 3, in which there are a plurality of tubes (32) between each of the manifolds (21, 27).

5. A condensing unit (1) as claimed in any preceding claim, in which the water jacket (35) surrounds all the gas conduits (30).

6. A condensing unit (1) as claimed in claim 1, in which each gas conduit (30) comprises a tubular member (50) having a peripheral wall (61, 62, 63) forming, in cross section, peaks and valleys whereby additional contact area separating the water and exhaust gases is provided.

7. A condensing unit (1) as claimed in claim 1, in which there are two gas conduits (30) formed by the one tubular member (60) with a dividing wall (23) forming the separate gas conduits, the tubular member having a peripheral wall (61, 62, 63) forming, in cross section, peaks and valleys whereby additional contact area separating the water and exhaust gases is provided.

8. A condensing unit (1) as claimed in claim 1, in which the water jacket (35) comprises a main tank (41) having substantially parallel extension tanks (42) projecting therefrom and abutting against a cover plate (45), the cover plate (45) extension tanks (42) and the main tank (4) forming the plurality gas conduits (30) therebetween.

9. A condensing unit (1) as claimed in claim 8, in which the cover plate (45) is in the form of another water tank communicating with the main tank.

10. A condensing unit (1) as claimed in any preceding claim, in which the water jacket (35) comprises an internal partial divider wall (36) dividing the water jacket (35) into two separate tanks interconnected adjacent the transfer manifold (27), one tank in contact with the gas transfer conduit (30) between the inlet end transfer manifolds (25, 27), the other with the gas transfer conduit between the outlet and transfer manifolds (27, 26).

11. A condensing unit (1) as claimed in any preceding claim in which the main enclosure (12) is adapted to lie against the side of the boiler (2) in close proximity thereto.

12. A condensing unit (1) as claimed in any of claims 1 to 10, in which the main enclosure (12) is adapted to lie on top of the boiler (2).
